# EUROPÄISCHE PATENTSCHRIFT

(11) **EP 0 778 397 B1**
(45) Veröffentlichungstag und Bekanntmachung des Hinweises auf die Patenterteilung: **05.02.2003**
(21) Anmeldenummer: 96810770.6
(22) Anmeldetag: 11.11.1996
(51) Int. Cl.: F01K 17/02, F01K 23/10

(54) **Verfahren zum Betrieb einer mit einem Abhitzedampferzeuger und einem Dampfverbraucher kombinierten Gasturbogruppe**
Method of operating a combined power plant with a waste heat boiler and a steam user
Procédé d'opération d'une centrale combinée avec une chaudière de récuperation et un consommateur de vapeur

(30) Priorität: 07.12.1995 DE 19545668
(43) Veröffentlichungstag der Anmeldung: 11.06.1997
(73) Patentinhaber: ALSTOM (Switzerland) Ltd, 5401 Baden (CH)
(72) Erfinder: Fetescu, Mircea, 5408 Ennetbaden (CH)

(56) Entgegenhaltungen:
- DE-C- 3 524 882
- GUBSER H R: "DAS KOMBINIERTE GAS-/DAMPFTURBINEN-HEIZKRAFTWERK UTRECHT" BROWN BOVERY MITTEILUNGEN, Bd. 65, Nr. 10, Oktober 1978, Seiten 687-690, XP000614438

## Beschreibung

### Technisches Gebiet

Die Erfindung betrifft ein Verfahren zum Betrieb einer mit einem nachgeschalteten Abhitzedampferzeuger und einem Dampfverbraucher kombinierten Gasturbogruppe für Wärme-/Kraftkopplung, entsprechend dem Oberbegriff des Anspruchs 1.

### Stand der Technik

Bei derartigen Kombianlagen für Wärme-/Kraftkopplung muss die thermische Energie stets in der zum jeweiligen Zeitpunkt benötigten Form bereitgestellt werden, d.h. als thermische Leistung zur Stromerzeugung im Generator und als Heizfluid bzw. Prozesswärme für die externen Wärmeverbraucher. Daher schwankt sowohl der Energiebedarf für die Stromerzeugung als auch der für die externen Wärmeverbraucher zwischen einem Minimal- und einem Maximalwert. Zur Bedarfsanpassung sind die Verwendung einer Zusatzfeuerung bzw. der Einsatz eines Zwei- oder Mehrdruck-Abhitzedampferzeugers bekannt.

Im Gegensatz zu den genannten Lösungen ist aus der DE-C2-25 12 774 eine Kombianlage mit einem Eindruck-Abhitzedampferzeuger ohne Zusatzfeuerung bekannt. Bei dieser Anlage wird Heizwasser für einen externen Wärmeverbraucher aus dem Abhitzedampferzeuger bereitgestellt. Dazu ist im Abhitzedampferzeuger ein vom eigentlichen Wasser-/Dampfkreislauf separater Heizwassererwärmer angeordnet, welcher mit einer eigenen Wasserzuleitung verbunden ist. Auf diese Weise wird einen Teil der nach dem Economizer noch vorhandenen Rauchgasenergie, welcher ansonsten über den Kamin abgeführt würde, zum Erhitzen des Heizwassers genutzt.

Dies geschieht jedoch nur bei grossem Heizwasserbedarf der externen Verbraucher. Zur Anpassung an einen sinkenden Wärmebedarf wird das Heizwasser teilweise oder vollständig am Abhitzedampferzeuger vorbeigeführt, wozu in der Wasserzuleitung eine sukzessiv öffnende Abzweigung ausgebildet ist. Damit wird ein nicht unerheblicher Teil nutzbarer Wärmeenergie an die Umgebung abgegeben.

Weil die Dampfturbine der Kombianlage als Gegendruckturbine ausgebildet ist, wird während deren Betrieb ständig ein Teil des Dampfes kondensiert, d.h. nicht zur Stromerzeugung genutzt. Bei grossem Wärmebedarf des externen Wärmeverbrauchers wird die resultierende Kondensationswärme zum Aufheizen des zusätzlichen Heizwassers verwendet. Die Kondensation erfolgt jedoch ständig, d.h. auch dann, wenn der Bedarf des externen Verbrauchers sinkt bzw. völlig entfällt. Um die Kondensationswärme auch in dieser Situation aufzufangen, muss ein zusätzlicher Wärmeverteiler/Kühler im Kreislauf angeordnet werden, über den die zurückgewonnene Energie an die Umgebung abgegeben wird. Die Kombianlage besitzt daher nicht nur eine geringe Betriebsflexibilität, sondern auch eine niedrige Effektivität.

Um derartige Energieverluste zu verhindern mündet die im Abhitzedampferzeuger zusätzlich angeordnete Heizschlange bei einem bekannten Kombikraftwerk (Brown Boveri Mitteilungen 10/78, S. 687-690) in einem geschlossenen Wasserkreislauf. Dort wird die Wärmeenergie des aufgeheizten Wassers mittels eines Vorwärmers auf das Speisewasser des Abhitzedampferzeugers und mittels eines Wärmetauschers auf das Heizwasser des externen Wärmeverbrauchers übertragen. Damit kann auch bei sinkendem externen Wärmebedarf eine interne Nutzung der nutzbaren Wärmeenergie des Rauchgases erfolgen.

Jedoch findet in dem o.g. Wärmetauscher bei niedrigem oder fehlendem Wärmebedarf des externen Verbrauchers nur eine geringe bzw. keine Wärmeubertragung statt, so dass sich der geschlossene Wasserkreislauf ständig weiter aufheizt. Die erhöhte Wassertemperatur führt zu einer geringeren Temperaturdifferenz in der zusätzlichen Heizschlange des Wasser-/Dampfkreislaufes, d.h. zu einem verringerten Rückgewinn an Energie und somit zu einer niedrigeren Leistung des Systems. Ausserdem wird die Kaminaustrittstemperatur erhöht. Zudem wird sowohl für den geschlossenen Wasserkreislauf als auch für den zum externen Verbraucher führenden Heizwasserkreislauf ständig Energie benötigt, um einerseits den Umlauf des Wassers und andererseits den Druck in den Rohrleitungen aufrecht zu erhalten. Schlussfolgernd daraus muss festgestellt werden, dass die Leistung des Systems bei fehlendem Wärmebedarf des externen Verbrauchers am geringsten ist.

Beide näher beschriebene Lösungen des Standes der Technik erfordern eine Vielzahl von zusätzlichen Bauteilen, wie Wärmetauscher, Pumpen, Ventile, Rohrleitungen und Steuerelemente. Zudem führt die Komplexität der Systeme zu einem komplizierten, störanfälligen Betrieb. Gemeinsamer Nachteil beider Lösungen sind daher die relativ hohen Materialkosten und der Verfahrensaufwand.

### Darstellung der Erfindung

Die Erfindung versucht, alle diese Nachteile zu vermeiden. Ihr liegt die Aufgabe zugrunde, ein Verfahren anzugeben, welches die nutzbare Wärmeenergie im Abhitzedampferzeuger einer Kombianlage für Wärme-/Kraftkopplung mit geringerem Aufwand nutzt und die Leistungsschwankungen bei sich veränderndem Bedarf des externen Wärmeverbrauchers verringert.

Erfindungsgemäss wird dies dadurch erreicht, dass bei einem Verfahren gemäss dem Oberbegriff des Anspruchs 1, zunächst eine, um die für die externe Nutzung maximal erforderliche Heizwassermenge, vergrösserte Menge an Speisewasser in den unteren Temperaturbereich des Abhitzedampferzeugers eingeleitet wird. Danach wird der aktuelle Bedarf an Heizwasser für die externe Nutzung ermittelt. Nach dem Erhitzen wird eine dem Heizwasserbedarf entsprechende Menge an Heizwasser von der zusätzlichen Menge an Speisewasser aus dem Wasser-/Dampfkreislauf abgezweigt. Das abgezweigte Heizwasser wird anschliessend der externen Nutzung zugeführt und dessen verbleibende Restwärme zum Aufheizen des Speisewasserbehälters genutzt. Bei fehlendem Heizwasserbedarf verbleibt die zusätzliche Menge an Speisewasser im Wasser-/Dampfkreislauf und wird dort zur zusätzlichen Dampferzeugung verwendet.

Mit diesem Verfahren kann der Bedarf des externen Wärmeverbrauchers durch Abzweigung einer entsprechenden Menge an Heizwasser stets gedeckt werden. Sinkt der externe Wärmebedarf, wird die freiwerdende Menge an zusätzlichem Speisewasser zur Dampferzeugung genutzt, indem sowohl die Grädigkeit als auch die der Approach-Temperatur verringert werden. Dabei wird eine selbsttätige, gleitende Anpassung an den externen Wärmebedarf, d.h. bei der Nutzung des zusätzlichen Speisewassers erreicht. Aufgrund dessen können Überwachungs- und Steuerfunktionen eingespart werden, so dass sich der Verfahrensaufwand reduziert.

Durch die Einspeisung einer vergrösserten Menge an Speisewasser in den mit einer entsprechend grossen Wärmetauscher-Oberfläche versehenen Abhitzedampferzeuger wird die Wärmerückgewinnung aus den Rauchgasen der Gasturbogruppe erhöht. Damit steigt die Nutzung der Wärmeenergie des Rauchgases und es sinkt vorteilhaft nicht nur der Energieverlust an die Umgebung sondern auch die Kamintemperatur. Da die Heizwasserleitung über den Speisewasserbehälter direkt mit dem Abhitzedampferzeuger verbunden ist, wird das Heizwasser auch bei Bedarfsausfall des externen Verbrauchers abgeleitet. Es existiert demnach kein geschlossener Heizwasserkreislauf, so dass die Gefahr einer Uberhitzung der Heizwasserleitung nicht besteht.

Es ist besonders zweckmässig, wenn das abgezweigte Heizwasser zunächst in Wärmetausch mit einem Wärmeübertragungsmedium des externen Verbrauchers gebracht und anschliessend zum Speisewasserbehälter weitergeleitet wird. Dadurch kann zunächst der Wärmebedarf des externen Verbrauchers befriedigt und die noch vorhandene Restwärme anschliessend intern genutzt werden.

Die Ermittlung des Wärmebedarfs des externen Verbrauchers erfolgt durch ständige Temperaturmessung des Heizwassers nach dessen Wärmetausch mit dem Wärmeübertragungsmedium des externen Verbrauchers. Die dabei ermittelte Temperaturdifferenz zur vorherigen Messung wird als Basis für eine anschliessende Regelung der aus dem Wasser-/Dampfkreislauf abzuzweigenden Heizwassermenge verwendet. Auf diese Weise wird eine besonders einfache Verteilung des vorhandenen Heizwassers, d.h. der rückführbaren Wärmeenergie erreicht.

In einer zweiten Ausführungsform der Erfindung wird die Restmenge des zusätzlichen Speisewassers nach dem Abzweigen einer dem aktuellen Wärmebedarf des externen Wärmeverbrauchers entsprechende Menge an Heizwasser aus dem Wasser-/Dampfkreislauf weiter erhitzt. Anschliessend wird die Restmenge des zusätzlichen Speisewassers ebenfalls aus dem Wasser-/Dampfkreislauf abgezweigt und in zwei Teile aufgeteilt. Der erste Teil wird zur Dampferzeugung verwendet und der zweite Teil zum Speisewasserbehälter rezirkuliert. Damit kann die bei sinkendem Wärmebedarf des externen Verbrauchers für diesen nicht nutzbare Heizwassermenge neben der Dampferzeugung auch direkt zur Erwärmung des Speisewassers im Speisewasserbehälter genutzt werden. Weil das Speisewasser auf diese Weise bereits vorgewärmt wird, muss dazu vom Dampfverbraucher nur noch eine entsprechend verringerte Dampfmenge abgezweigt werden. Im Ergebnis dessen steigt die verfügbare Dampfmenge, was gleichbedeutend mit einer höheren Leistung des Dampfverbrauchers ist.

In einer nächsten Ausführungsform der Erfindung wird die für den externen Verbraucher nicht benötigte, jedoch bereits aus dem Wasser-/Dampfkreislauf abgezweigte Heizwassermenge vor dem Wärmetausch nochmals abgezweigt und direkt dem Speisewasserbehälter zugeführt. Dadurch entstehen kürzere Leitungswege, was die Energieverluste reduziert. Ausserdem werden Bauteile, wie z.B. Leitungsrohre, Reduzierventile, Überwachungselemente usw. eingespart, so dass nicht nur die Materialkosten sondern der gesamte Bauaufwand sinkt.

Bei einer weiteren Ausführungsform der Erfindung wird zunächst das Speisewasser mit geringem Druck in den Wasser/Dampfkreislauf eingeleitet. Nach dem Abzweigen des Heizwassers wird das erhitzte Speisewasser ebenfalls aus dem Abhitzedampferzeuger ausgeführt, anschliessend mit hohem Druck erneut hineingepumpt und vor seiner Verdampfung weiter erhitzt. Dabei wird nur die zur Dampferzeugung benötigte Wassermenge mit Hochdruck beaufschlagt, wodurch auch die zum Pumpen verwendete Antriebsenergie optimal einsetzbar ist. Zudem können Druckabnahmeverluste in der Heizwasserleitung vermieden werden. Schliesslich werden weniger Bauteile benötigt, so dass die Anlage preisgünstiger zu erstellen ist.

### Kurze Beschreibung der Zeichnung

In der Zeichnung sind mehrere Ausführungsbeispiele der Erfindung anhand der Schaltung einer Gasturbinen-/Dampfturbinen-Kombianlage mit Eindruck-Abhitzedampferzeuger und ohne Zusatzfeuerung dargestellt.

Es zeigen:
- Fig. 1: ein Fluss-Schema der Kombianlage;
- Fig. 2: einen Ausschnitt aus Fig.1, im Bereich des Abhitzedampferzeugers, in einer zweiten Ausführungsform;
- Fig. 3: eine Darstellung entsprechend Fig. 2, jedoch in einer dritten Ausführungsform;
- Fig. 4: eine Darstellung entsprechend Fig. 2, in einer nächsten Ausführungsform;
- Fig. 5: eine Darstellung entsprechend Fig. 3, in einer weiteren Ausführungsform.

Es sind nur die für das Verständnis der Erfindung wesentlichen Elemente gezeigt. Die Strömungsrichtung der Arbeitsmittel ist mit Pfeilen bezeichnet.

### Weg zur Ausführung der Erfindung

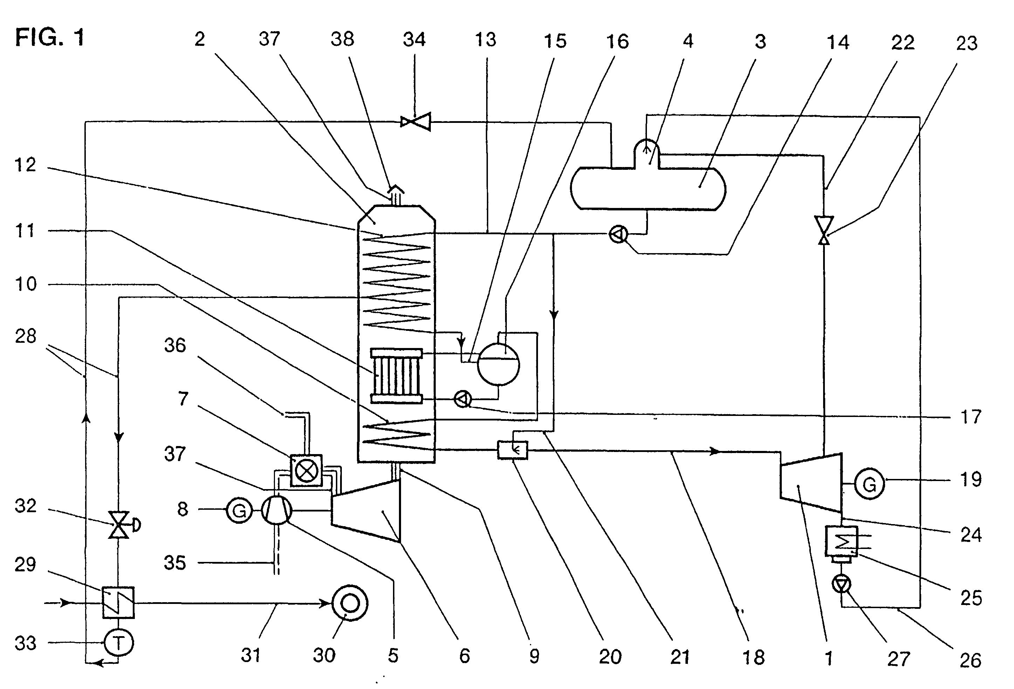

Die in Fig. 1 dargestellte Gasturbinen-/Dampfturbinen-Kombianlage besteht im wesentlichen aus einer Gasturbogruppe, einem als Kondensations-Dampfturbine ausgebildeten Dampfverbraucher 1, einem zwischen beiden angeordneten Abhitzedampferzeuger 2 und einem Speisewasserbehälter 3 mit integriertem Speisewasservorwärmer/Entgaser 4. Die Gasturbogruppe setzt sich aus einem Verdichter 5, einer mit ihm gekoppelten Gasturbine 6, einer Brennkammer 7 sowie einem Generator 8 zusammen. Statt der Kondensations-Dampfturbine 1 können natürlich auch andere Dampfturbinen oder Dampfverbraucher 1 Verwendung finden.

Im über einen Rauchgaskanal 9 mit der Gasturbine 6 verbundenen Abhitzedampferzeuger 2 sind nacheinander ein Überhitzer 10, ein Verdampfer 11 und ein Economizer 12 angeordnet. Der Economizer 12 ist eingangsseitig über eine Speisewasserzuleitung 13 mit dem Speisewasserbehälter 3 verbunden. In der Speisewasserzuleitung 13 ist eine Speisewasserpumpe 14 angeordnet. Ausgangsseitig ist der Economizer 12 über eine Wasserleitung 15 mit einer Dampftrommel 16 gekoppelt. An die Dampftrommel 16 sind der Verdampfer 11 und der Überhitzer 10 angeschlossen, wobei zwischen Dampftrommel 16 und Verdampfer 11 eine Umwälzpumpe 17 angeordnet ist. Eine Frischdampfleitung 18 verbindet den Überhitzer 10 mit der Kondensations-Dampfturbine 1, auf deren Welle ein zweiter Generator 19 angeordnet ist.

In der Frischdampfleitung 18 ist ein Frischdampfkühler 20 ausgebildet und über eine Leitung 21 mit der Speisewasserzuleitung 13 verbunden. Der Speisewasservorwärmer/Entgaser 4 ist über eine Anzapfleitung 22 mit der Kondensations-Dampfturbine 1 gekoppelt. In der Anzapfleitung 22 ist ein Regel/Druckminderventil 23 angeordnet. Die Kondensations-Dampfturbine 1 ist über eine Abdampfleitung 24 mit einem Kondensator 25 verbunden. Der Speisewasservorwärmer/Entgaser 4 ist mittels einer Wasserleitung 26, in der eine Kondensatpumpe 27 angeordnet ist, am Kondensator 25 angeschlossen.

Vom mit einer vergrösserten Wärmetausch-Oberfläche ausgebildeten Economizer 12 zweigt eine Heizwasserleitung 28 ab, welche im Speisewasserbehälter 3 endet. In der Heizwasserleitung 28 ist ein Vorwärmer 29 ausgebildet, der mit einer zu einem externen Verbraucher 30 führenden Heizwasserleitung 31 zusammenwirkt. Als externer Verbraucher 30 ist beispielsweise ein Fernheiznetz mit der Heizwasserleitung 31 verbunden. In der Heizwasserleitung 31 können weitere, aus der Frischdampfleitung 18 oder der Kondensations-Dampfturbine 1 gespeiste Vorwärmer angeordnet werden (nicht dargestellt). Stromauf des Vorwärmers 29 ist in der Heizwasserleitung 28 ein Regelventil 32 und stromab des Vorwärmers 29 eine Temperaturmessstelle 33 angeordnet. Beide sind über eine nicht dargestellte Auswerteund Steuereinheit miteinander verbunden. Die Heizwasserleitung 28 enthält ein zwischen dem Vorwärmer 29 und dem Speisewasserbehälter 3 angeordnetes Druckminderventil 34.

Beim Betrieb der Kombianlage saugt der Verdichter 5 Umgebungsluft 35 an, komprimiert diese und leitet sie in die Brennkammer 7 weiter. Dort wird Brennstoff 36 zugeführt, mit der verdichteten Umgebungsluft 35 vermischt und das daraus gebildete Brennstoff-Luft-Gemisch verbrannt. Die bei der Verbrennung entstandenen Rauchgase 37 werden in die Gasturbine 6 eingeleitet und in ihr entspannt. Dabei werden gleichzeitig der auf einer Welle mit der Gasturbine 6 angeordnete Verdichter 5 und der Generator 8 angetrieben, letzterer zwecks Stromerzeugung.

Die entspannten, noch heissen Rauchgase 37 werden in den Abhitzedampferzeuger 2 eingeleitet und dort zur Erzeugung von Dampf für die Kondensations-Dampfturbine 1 genutzt. Dazu wird den Rauchgasen 37 durch Wärmetausch, mit im Gegenstrom durch den Abhitzedampferzeuger 2 geführtem und aus dem Speisewasserbehälter 3 stammendem Wasser, Wärmeenergie entzogen. Danach werden die Rauchgase 37 über einen Kamin 38 an die Umgebung abgegeben. Der entstandene, überhitzte Dampf wird über die Frischdampfleitung 18 der Kondensations-Dampfturbine 1 zugeführt, wobei die Dampftemperatur durch Einspritzen von Wasser im Frischdampfkühler 20 geregelt wird. Der heisse Dampf wird in der Kondensations-Dampfturbine 1 entspannt, so dass der mit ihr verbundene Generator 19 zwecks Stromerzeugung angetrieben wird.

Der über die Abdampfleitung 24 aus der Kondensations-Dampfturbine 1 austretende Dampf wird im Kondensator 25 niedergeschlagen. Von dort aus wird das entstandene Kondensat mittels der in der Wasserleitung 26 angeordneten Kondensatpumpe 27 zum Speisewasserbehälter 3 gefördert. Über die Anzapfleitung 22 der Kondensations-Dampfturbine 1 wird heisser Dampf zum Speisewasservorwärmer/Entgaser 4, d.h. ebenfalls zum Speisewasserbehälter 3 geleitet. Der Anzapfdampf dient zur Beheizung des Speisewasserbehälters 3. Das in diesem zwischengespeicherte Speisewasser wird von der Speisewasserpumpe 14 ständig in den Abhitzedampferzeuger 2 gepumpt.

Es gelangt zunächst in den Economizer 12, wo es vorgewärmt und zur Dampftrommel 16 weitergeleitet wird. Nunmehr wird das Speisewasser mittels der Umwälzpumpe 17 in den Verdampfer 11 geleitet und dort verdampft. Der entstandene Dampf wird nochmals durch die Dampftrommel 16 und nach Trennung der gasförmigen von der flüssigen Phase in den Überhitzer 10 geleitet. Im Überhitzer 10 wird der Dampf überhitzt und anschliessend über die Frischdampfleitung 18 der Kondensations-Dampfturbine 1 zugeführt. Damit ist der Kreislauf geschlossen.

Das bis zu dieser Stelle beschriebene Verfahren betrifft eine ausschliesslich zur Stromerzeugung bestimmte Kombianlage. Jedoch ist hier zusätzlich ein externer Wärmeverbraucher 30 aus dem Abhitzedampferzeuger 2 mit Prozessdampf bzw. Prozesswärme zu versorgen. Dazu wird in den Abhitzedampferzeuger 2 eine Wassermenge eingeleitet, welche die für die Dampferzeugung erforderliche Durchflussmenge an Speisewasser übersteigt. Somit wird zunächst ein um die maximale Heizwassermenge vergrösserte Menge an Speisewasser aus dem Speisewasserbehälter 3 in den Abhitzedampferzeuger 2 gepumpt, dessen Economizer 12 mit einer entsprechend vergrösserten Wärmetauscher-Oberfläche versehenen ist. Nach dem Erhitzen des Speisewassers im Economizer 12 wird die zusätzliche Menge als Heizwasser aus dem Wasser-/Dampfkreislauf in die Heizwasserleitung 28 abgezweigt.

Dazu wird an der Temperaturmessstelle 33, d.h. stromab des Vorwärmers 29, ständig die Temperatur des Heizwassers erfasst. Die mit der Temperaturmessstelle 33 verbundene Auswerte- und Steuereinheit ermittelt bei Bedarfsänderung des externen Verbrauchers 30 eine Temperaturdifferenz, welche als Basis für eine entsprechende Verstellung des Regelventils 32 dient. Auf diese Weise wird genau die vom externen Verbraucher 30 benötigte Heizwassermenge aus dem Economizer 12 abgezweigt. Dieses Heizwasser wird anschliessend durch den Vorwärmer 29 geleitet, wobei der grösste Teil seiner Wärmeenergie an das durch die Heizwasserleitung 31 fliessende Wärmeübertragungsmedium des externen Verbrauchers 30 übertragen wird. Die im Heizwasser verbleibende Restwärme wird über die Heizwasserleitung 28 abgeführt und dient zum Aufheizen des Speisewasserbehälters 3.

Ergibt die Temperaturmessung einen niedrigeren als den maximalen Bedarf des externen Verbrauchers 30, so wird das Regelventil 32 entsprechend geschlossen und so eine verringerte Menge an Heizwasser über die Heizwasserleitung 28 abgezweigt. Die vom externen Verbraucher 30 nicht benötigte, d.h. freiwerdende Menge des zusätzlichen Speisewassers wird im Abhitzedampferzeuger 2 zur Dampferzeugung genutzt.

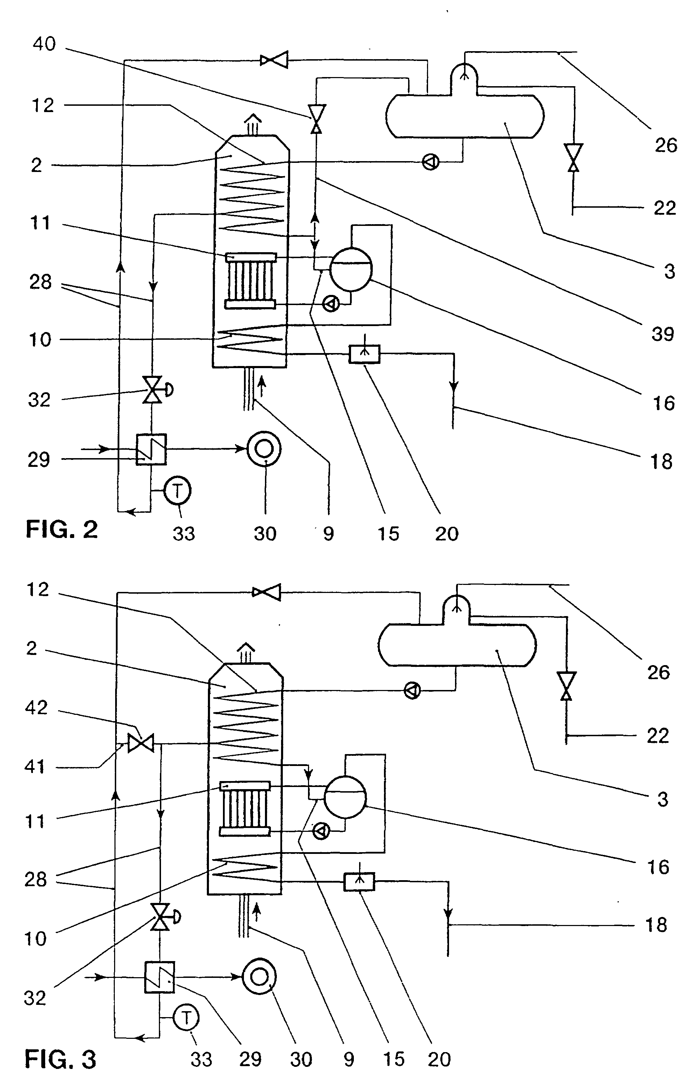

Ein zweites Ausführungsbeispiel unterscheidet sich vom ersten nur dadurch, dass von der Wasserleitung'15 eine Leitung 39 abzweigt, welche am Speisewasserbehälter 3 endet und ein Regel-/Druckminderventil 40 enthält (Fig. 2).

Ermittelt die Auswerte- und Steuereinheit hierbei einen niedrigeren als den maximalen Bedarf des externen Verbrauchers 30, so wird die Restmenge des zusätzlichen Speisewassers nach dem Abzweigen des Heizwassers weiter erhitzt und anschliessend ebenfalls aus dem Wasser-/Dampfkreislauf abgezweigt. Danach erfolgt jedoch eine Aufteilung dieser Restmenge in zwei Teile. Ein Teil wird, gemeinsam mit dem eigentlichen Speisewasser, zur Dampferzeugung verwendet und der andere Teil über die Leitung 39 zum Speisewasserbehälter 3 rezirkuliert. Damit wird die bei sinkendem Wärmebedarf des externen Verbrauchers 30 für diesen nicht nutzbare, zusätzliche Wassermenge, neben der Dampferzeugung, auch zur Vorwärmung des Speisewassers im Speisewasserbehälter 3 genutzt. Auf diese Weise muss über die Anzapfleitung 22 weniger Dampf zur Heizung des Speisewasserbehälters 3 abgeführt werden, so dass die Leistung der Kondensations-Dampfturbine 1 und damit die Stromerzeugung des Generators 19 steigt.

Bei einem dritten Ausführungsbeispiel ist in der Heizwasserleitung 28 eine den Vorwärmer 29 überbrückende Bypassleitung 41 und in dieser wiederum ein Regelventil 42 angeordnet (Fig. 3). Das Regelventil 42 ist mit der o.g. Auswerte- und Steuereinheit verbunden und wird entsprechend dem Wärmebedarf des externen Verbrauchers 30 mehr oder weniger geöffnet bzw. geschlossen. Damit wird die für den externen Verbraucher 30 nicht benötigte, jedoch bereits aus dem Wasser-/Dampfkreislauf abgezweigte Heizwassermenge direkt dem Speisewasserbehälter 3 zugeführt. Eine von der aus dem Economizer 12 führenden Wasserleitung 15 abzweigende und im Speisewasserbehälter 3 endende Leitung 39 ist bei diesem Ausführungsbeispiel nicht erforderlich.

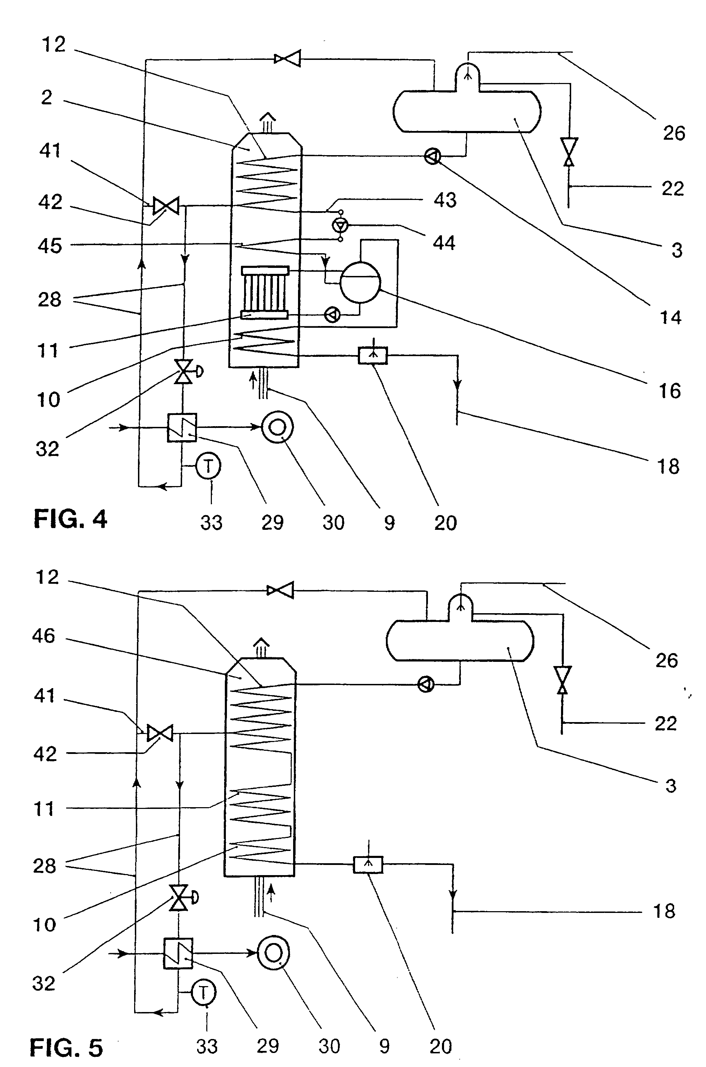

In einem nächsten Ausführungsbeispiel ist der Economizer 12, stromab der Abzweigung der Heizwasserleitung 28, über eine zusätzliche Wasserleitung 43 mit einer ausserhalb des Abhitzedampferzeugers 2 angeordneten Hochdruck-Speisewasserpumpe 44 verbunden (Fig. 4). Diese zieht das vorgewärmte Speisewasser stromab der Abzweigung des für den externen Verbraucher 30 benötigten Heizwassers aus dem Economizer 12 ab und fördert es weiter stromab wieder in einen, im Abhitzedampferzeuger 2 angeordneten Hochdruck-Economizer 45. Zudem ist die in der Speisewasserzuleitung 13 des Abhitzedampferzeugers 2 angeordnete Speisewasserpumpe 14 als Niederdruck-Speisewasserpumpe ausgebildet.
Bei diesem Ausführungsbeispiel werden der Economizer 12 und die sich anschliessende Heizwasserleitung 28 lediglich mit dem von der Niederdruck-Speisewasserpumpe 14 gelieferten Niederdruck-Wasser beaufschlagt. Ausschliesslich die zur Dampferzeugung für die Kondensations-Dampfturbine 1 verwendete Menge an Speisewasser wird durch die Hochdruck-Speisewasserpumpe 44 und den Hochdruck-Economizer 45 geleitet. Auf diese Weise muss nur ein Teil der Gesamt-Wassermenge mit Hochdruck beaufschlagt werden. Deshalb ist die zum Antrieb der beiden Pumpen 14, 44 benötigte Hilfsenergie optimal einsetzbar. Ausserdem werden Druckabnahmeverluste in der Heizwasserleitung 28 bis hin zum Speisewasserbehälter 3 vermieden.

In einem weiteren Ausführungsbeispiel ist zwischen der Gasturbogruppe und der Kondensations-Dampfturbine 1 ein als Einrohrkessel ausgebildeter Abhitzedampferzeuger 46 angeordnet (Fig. 5). Diese Lösung ist wesentlich billiger, da sie ohne Dampftrommel 16, Umwälzpumpe 19, die sie verbindenden Rohrleitungen und die entsprechenden Steuerelemente auskommt. Ansonsten ist diese Lösung analog dem Ausführungsbeispiel 3 ausgebildet. Bei einem geringen Wärmebedarf des externen Verbrauchers 30 verbleibt die freiwerdende Menge an zusätzlichem Speisewasser im Abhitzedampferzeuger 46 wird dort direkt zur Dampferzeugung für die Kondensations-Dampfturbine 1 genutzt.

### Bezugszeichenliste

- 1: Dampfverbraucher, Kondensations-Dampfturbine
- 2: Abhitzedampferzeuger
- 3: Speisewasserbehälter
- 4: Speisewasservorwärmer/Entgaser
- 5: Verdichter
- 6: Gasturbine
- 7: Brennkammer
- 8: Generator
- 9: Rauchgaskanal
- 10: Überhitzer
- 11: Verdampfer
- 12: Economizer
- 13: Speisewasserzuleitung
- 14: Speisewasserpumpe
- 15: Wasserleitung
- 16: Dampftrommel
- 17: Umwälzpumpe
- 18.: Frischdampfleitung
- 19: Generator, zweiter
- 20: Frischdampfkühler
- 21: Leitung
- 22: Anzapfleitung
- 23: Regel-/Druckminderventil
- 24: Abdampfleitung
- 25: Kondensator
- 26: Wasserleitung
- 27: Kondensatpumpe
- 28: Heizwasserleitung
- 29: Vorwärmer
- 30: externer Verbraucher, Wärmeverbraucher
- 31: Heizwasserleitung
- 32: Regelventil
- 33: Temperaturmessstelle
- 34: Druckminderventil
- 35: Umgebungsluft
- 36: Brennstoff
- 37: Rauchgas
- 38: Kamin
- 39: Leitung
- 40: Regel-/Druckminderventil
- 41: Bypassleitung
- 42: Regelventil
- 43: Wasserleitung, zusätzliche
- 44: Hochdruck-Speisewasserpumpe
- 45: Hochdruck-Economizer
- 46: Abhitzedampferzeuger, Einrohrkessel

## Patentansprüche

1. Verfahren zum Betrieb einer mit einem nachgeschalteten Abhitzedampferzeuger (2) und einem Dampfverbraucher (1), insbesondere einer Dampfturbine, kombinierten Gasturbogruppe für Wärme-/Kraftkopplung, wobei die Gasturbogruppe aus zumindest einem Verdichter (5), einer Gasturbine (6), einer Brennkammer (7) sowie einem Generator (8) besteht und der Abhitzedampferzeuger (2) mit einem Speisewasserbehälter (3), einschliesslich eines Speisewasservorwärmers/Entgasers (4), verbunden ist, bei dem
a) sowohl Speisewasser für den Wasser-/Dampfkreislauf als auch zusätzliches Heizwasser für einen externen Wärmeverbraucher (30) im unteren Temperaturbereich des Abhitzedampferzeugers (2) in diesen eingeleitet wird,
b) das Heizwasser nach dem Erhitzen sowohl der externen als auch einer internen Nutzung zugeführt wird,
**dadurch gekennzeichnet, dass**
c) zunächst eine, um die für die externe Nutzung maximal erforderliche Heizwassermenge, vergrösserte Menge an Speisewasser in den Abhitzedampferzeuger (2) eingeleitet wird,
d) danach der aktuelle Bedarf an Heizwasser für die externe Nutzung ermittelt wird,
e) nach dem Erhitzen eine dem Heizwasserbedarf entsprechende Menge an Heizwasser von der zusätzlichen Menge an Speisewasser aus dem Wasser-/Dampfkreislauf abgezweigt wird, bei fehlendem Heizwasserbedarf die zusätzliche Menge an Speisewasser im Wasser-/Dampfkreislauf verbleibt und zur zusätzlichen Dampferzeugung verwendet wird,
f) das abgezweigte Heizwasser der externen Nutzung zugeführt und dessen Restwärme zum Aufheizen des Speisewasserbehälters (3) verwendet wird.

2. Verfahren nach Anspruch 1, **dadurch gekennzeichnet, dass** das abgezweigte Heizwasser zunächst in Wärmetausch mit einem Wärmeübertragungsmedium des externen Wärmeverbrauchers (30) gebracht und anschliessend zum Speisewasserbehälter (3) weitergeleitet wird.

3. Verfahren nach Anspruch 2, **dadurch gekennzeichnet, dass** die Ermittlung des Wärmebedarfs des externen Wärmeverbrauchers (30) durch ständige Temperaturmessung des Heizwassers nach dessen Wärmetausch mit dem Wärmeübertragungsmedium des externen Verbrauchers (30) erfolgt und die dabei ermittelte Temperaturdifferenz zur vorherigen Messung als Basis für eine entsprechend Regelung der aus dem Wasser-/Dampfkreislauf abzuzweigenden Heizwassermenge verwendet wird.

4. Verfahren nach einem der Ansprüche 1 bis 3, **dadurch gekennzeichnet, dass** zunächst eine dem aktuellen Wärmebedarf des externen Wärmeverbrauchers (30) entsprechende Menge an Heizwasser aus dem Wasser-/Dampfkreislauf abgezweigt, die Restmenge des zusätzlichen Speisewassers weiter erhitzt, anschliessend ebenfalls aus dem Wasser/Dampfkreislauf abgezweigt, in zwei Teile aufgeteilt, ein Teil zur Dampferzeugung verwendet und der andere Teil zum Speisewasserbehälter (3) rezirkuliert wird.

5. Verfahren nach einem der Ansprüche 1 bis 3, **dadurch gekennzeichnet, dass** die für den externen Wärmeverbraucher (30) nicht benötigte, jedoch bereits aus dem Wasser/Dampfkreislauf abgezweigte Heizwassermenge vor dem Wärmetausch nochmals abgezweigt und direkt dem Speisewasserbehälter (3) zugeführt wird.

6. Verfahren nach Anspruch 5, **dadurch gekennzeichnet, dass** das Speisewasser zunächst mit geringem Druck in den Wasser-/Dampfkreislauf eingeleitet, das erhitzte Speisewasser nach dem Abzweigen des Heizwassers ebenfalls aus dem Abhitzedampferzeuger (2) ausgeführt, anschliessend mit hohem Druck erneut hineingepumpt und vor seiner Verdampfung weiter erhitzt wird.

## Claims

1. Method of operating a gas-turbine group, combined with a downstream waste-heat steam generator (2) and a steam consumer (1), in particular a steam turbine, for heat/power cogeneration, the gas-turbine group consisting of at least one compressor (5), a gas turbine (6), a combustion chamber (7) and a generator (8), and the waste-heat steam generator (2) being connected to a feedwater tank (3), including a feedwater preheater/deaerator (4), in which method
a) both feedwater for the water/steam cycle and additional heating water for an external heat consumer (30) in the low temperature region of the waste-heat steam generator (2) are directed into the latter,
b) the heating water, after the heating, is supplied both for external utilization and for internal utilization,
**characterized in that**
c) first of all a quantity of feedwater increased by the maximum heating-water quantity required for the external utilization is directed into the waste-heat steam generator (2),
d) the current demand for heating water for the external utilization is then determined,
e) after the heating, a quantity of heating water which is taken from the additional quantity of feedwater and which corresponds to the demand for heating water is diverted from the water/steam cycle, if there is no demand for heating water the additional quantity of feedwater remains in the water/steam cycle and is used for additional generation of steam,
f) the diverted heating water is supplied for the external utilization and its residual heat is used to heat the feedwater tank (3).

2. Method according to Claim 1, **characterized in that** the diverted heating water is first of all brought into heat exchange with a heat transfer medium of the external heat consumer (30) and is then passed on to the feedwater tank (3).

3. Method according to Claim 2, **characterized in that** the demand for heat at the external consumer (30) is determined by constant temperature measurement of the heating water after its heat exchange with the heat transfer medium of the external consumer (30) and the temperature difference, determined in the process, from the previous measurement is used as a basis for a corresponding control of the heating-water quantity to be diverted from the water/steam cycle.

4. Method according to one of Claims 1 to 3, **characterized in that** first of all a quantity of heating water corresponding to the current demand for heat at the external consumer (30) is diverted from the water/steam cycle, the residual quantity of the additional feedwater is heated further, is then likewise diverted from the water/steam cycle and split up into two portions, one portion is used to generate steam and the other portion is recirculated to the feedwater tank (3).

5. Method according to one of Claims 1 to 3, **characterized in that** the heating-water quantity not required for the external heat consumer (30) but already diverted from the water/steam cycle is diverted again before the heat exchange and fed directly to the feedwater tank (3).

6. Method according to Claim 5, **characterized in that** the feedwater is first of all passed at low pressure into the water/steam cycle, the heated feedwater is likewise passed out of the waste-heat steam generator (2) after the diverting of the heating water, is then pumped in again at high pressure and is heated further before its evaporation.

## Revendications

1. Procédé d'exploitation d'un turbogroupe à gaz combiné avec un générateur de vapeur de récupération (2) monté en aval et un utilisateur de vapeur (1), en particulier une turbine à vapeur, pour une cogénération, le groupe de turbines à gaz étant constitué d'au moins un compresseur (5), une turbine à gaz (6), une chambre de combustion (7) ainsi qu'un générateur (8) et le générateur de vapeur de récupération (2) est raccordé à un réservoir d'eau d'alimentation (3), comprenant un préchauffeur/dégazeur d'eau d'alimentation (4), dans lequel :
a) autant de l'eau d'alimentation pour le circuit d'eau/vapeur que de l'eau de chauffage supplémentaire pour un utilisateur de chaleur externe (30) sont introduites dans le générateur de vapeur à récupération (2) dans la zone de températures inférieure de ce dernier,
b) l'eau de chauffage après chauffage est acheminée à l'utilisation externe ainsi qu'à une utilisation interne,
**caractérisé en ce que** :
c) tout d'abord un débit d'eau d'alimentation augmenté du débit d'eau de chauffage nécessaire au maximum à l'utilisation externe est introduit dans le générateur de vapeur de récupération (2),
d) ensuite, les besoins courants en eau de chauffage pour l'utilisation externe sont déterminés,
e) après chauffage, on dérive un débit d'eau de chauffage correspondant aux besoins en eau de chauffage du débit supplémentaire d'eau d'alimentation à partir du circuit d'eau/vapeur, en cas d'absence de besoins en eau de chauffage, le débit supplémentaire d'eau d'alimentation reste dans le circuit d'eau/vapeur et est utilisé pour la production de vapeur supplémentaire,
f) l'eau de chauffage dérivée est acheminée à l'utilisation externe et sa chaleur résiduaire est utilisée pour le chauffage du réservoir d'eau d'alimentation (3).

2. Procédé selon la revendication 1, **caractérisé en ce que** l'eau de chauffage dérivée est amenée tout d'abord en échange de chaleur avec un agent de transfert de chaleur de l'utilisateur de chaleur externe (30) et est ensuite transférée au réservoir d'eau d'alimentation (3).

3. Procédé selon la revendication 2, **caractérisé en ce que** la détermination des besoins en chaleur de l'utilisateur de chaleur externe (30) se fait par une mesure permanente de la température de l'eau de chauffage après son échange de chaleur avec l'agent de transfert de chaleur de l'utilisateur externe (30) et la différence de température ainsi déterminée par rapport à la mesure antérieure est utilisée comme base pour une régulation correspondante du débit d'eau de chauffage à dériver du circuit d'eau/vapeur.

4. Procédé selon l'une quelconque des revendications 1 à 3, **caractérisé en ce que**, tout d'abord, un débit d'eau de chauffage correspondant aux besoins en chaleur courants de l'utilisateur de chaleur externe (30) est dérivé du circuit eau/vapeur, le débit résiduaire de l'eau d'alimentation supplémentaire est réchauffé, ensuite il est dérivé également du circuit d'eau/vapeur, divisé en deux parties, une partie étant utilisée pour la production de vapeur et l'autre partie étant remise en circulation vers le réservoir d'eau d'alimentation (3).

5. Procédé selon l'une quelconque des revendications 1 à 3, **caractérisé en ce que** le débit d'eau de chauffage qui n'est pas nécessité par l'utilisateur de chaleur externe (30), mais qui est déjà dérivé du circuit d'eau/vapeur est encore une fois dérivé avant échange de chaleur thermique est directement acheminé au réservoir d'eau d'alimentation (3).

6. Procédé selon la revendication 5, **caractérisé en ce que** l'eau d'alimentation est tout d'abord introduite sous faible pression dans le circuit d'eau/vapeur, l'eau d'alimentation chauffée est extraite également du générateur de vapeur à récupération (2) après dérivation de l'eau de chauffage, elle y est à nouveau pompée ensuite sous pression élevée et est réchauffée avant son évaporation.
